# EUROPÄISCHE PATENTANMELDUNG

(11) **EP 4 437 849 A1**
(43) Veröffentlichungstag der Anmeldung: **02.10.2024**
(21) Anmeldenummer: 23164575.5
(22) Anmeldetag: 28.03.2023
(51) Int. Cl.: A01P 1/00, C01G 1/02, C23C 18/08

(54) **MIT SILBEROXID UND RUTHENIUMOXID AUSGESTATTETES PARTIKELFÖRMIGES WASSERUNLÖSLICHES ANORGANISCHES MATERIAL**

(71) Anmelder: Heraeus Precious Metals GmbH & Co. KG, 63450 Hanau (DE)
(72) Erfinder: Kovjenic, Milena, 63450 Hanau (DE); Meza-Chincha, Ana-Lucia, 63450 Hanau (DE); Harwardt, Marie-Lena, 63450 Hanau (DE); Gock, Michael, 63450 Hanau (DE); Hörteis, Matthias, 63450 Hanau (DE)
(74) Vertreter: Heraeus IP

(57) **Zusammenfassung**

Mit Silberoxid und Rutheniumoxid ausgestattetes partikelförmiges wasserunlösliches anorganisches Material sowie Verfahren zu seiner Herstellung durch Trocknung und einer unter nichtreduzierender Atmosphäre stattfindenden thermolytischen Behandlung einer Zubereitung umfassend Wasser, Partikel aus wasserunlöslichem anorganischem Material, mindestens einen Silberoxidvorläufer und mindestens einen Rutheniumoxidvorläufer.

## Beschreibung

Die Erfindung betrifft mit den Edelmetalloxiden Silberoxid und Rutheniumoxid ausgestattetes partikelförmiges wasserunlösliches anorganisches Material sowie ein effizientes Verfahren zu seiner Herstellung.

Aufgabe der Erfindung war die Bereitstellung eines neuen, einfach und effizient herstellbaren antimikrobiell wirksamen Materials.

Die Aufgabe kann gelöst werden durch Bereitstellung eines Produkts in Form eines mit Silberoxid (Ag₂O) und Rutheniumoxid (RuO₂) ausgestatteten partikelförmigen wasserunlöslichen anorganischen Materials. Zur Vermeidung von Missverständnissen, der im hiesigen Zusammenhang verwendete Begriff "wasserunlöslich" ist nicht absolut zu verstehen, sondern er bezeichnet eine Wasserunlöslichkeit im praktischen Sinne, d.h. eine Wasserlöslichkeit beispielsweise kleiner als 0,01 g pro Liter Wasser bei 20°C. Das wasserunlösliche anorganische Material (das wasserunlösliche anorganische Material als solches) ist ein refraktäres, also hochschmelzendes Material, d.h. ein bei Anwendungstemperaturen des erfindungsgemäßen Produkts, beispielsweise bei Temperaturen niedriger als 1000°C keinesfalls schmelzendes Material. Das wasserunlösliche anorganische Material (das wasserunlösliche anorganische Material als solches) ist bevorzugt ausgewählt aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid (pyrogene Kieselsäure), gefälltem Siliziumdioxid (Fällungskieselsäure), Natriumaluminiumsilikat, Zirkoniumsilikat, Zeolith, Hydrotalcit und gamma-Aluminiumoxidhydroxid.

Das erfindungsgemäße mit Silberoxid und Rutheniumoxid ausgestattete partikelförmige wasserunlösliche anorganische Material wird in der weiteren Folge auch kurz nur als "erfindungsgemäßes Produkt" bezeichnet. Sein durch das Silberoxid und Rutheniumoxid gebildeter Silber-plus-Ruthenium-Gewichtsanteil kann beispielsweise im Bereich von 0,1 bis 50 Gew.-% (Gewichts-%), bevorzugt 1 bis 40 Gew.-% liegen bei einem zugleich herrschenden Silber: Ruthenium-Gewichtsverhältnis beispielsweise im Bereich von 1 bis 2000 Gewichtsteilen Silber: 1 Gewichtsteil Ruthenium.

Bei dem partikelförmigen wasserunlöslichen anorganischen Material beziehungsweise bei den Partikeln aus dem wasserunlöslichen anorganischen Material als solchem handelt es sich um ein an sich edelmetalloxidfreies Trägermaterial (Trägerpartikel) für das Silberoxid und das Rutheniumoxid, d.h. in dem erfindungsgemäßen Produkt fungiert das partikelförmige wasserunlösliche anorganische Material als Träger für das Silberoxid und das Rutheniumoxid. Das erfindungsgemäße Produkt kann eine oder mehrere Arten von Trägermaterial umfassen; üblicherweise und auch bevorzugt ist nur eine Art von Trägermaterial im erfindungsgemäßen Produkt präsent.

Das erfindungsgemäße Produkt kann eine durchschnittliche Teilchengröße (d50) beispielsweise im Bereich von 0,3 bis 100 µm und eine BET-Oberfläche beispielsweise im Bereich von 1 bis 2000 m²/g aufweisen. Es kann ferner ein Porenvolumen beispielsweise im Bereich von 0,5 bis 10 mL/g haben.

Der hierin verwendete Begriff "durchschnittliche Teilchengröße" bedeutet den mittels Laserbeugung bestimmbaren volumenmittleren Primärteilchendurchmesser (d50). Als Maß für den Teilchendurchmesser kann dabei zweckmäßig der sogenannte Equivalent Circular Area Diameter (ECAD) verwendet werden (vgl. RENLIANG XU ET AL: "Comparison of sizing small particles using different technologies", POWDER TECHNOLOGY, ELSEVIER, BASEL (CH), Bd. 132, Nr. 2-3, 24. Juni 2003 (2003-06-24), Seiten 145-153). Laserbeugungsmessungen können mit einem entsprechenden Teilchengrößenmessgerät, beispielsweise einem Mastersizer 3000 oder einem Mastersizer 2000 von Malvern Instruments nach der Nassbestimmungsmethode durchgeführt werden. Bei der Nassbestimmungsmethode kann partikelförmige Probe im Rahmen der Probenvorbereitung in Ethanol mittels Ultraschall dispergiert werden.

Der hierin verwendete Begriff "BET-Oberfläche" bezeichnet die spezifische Oberfläche, welche mittels BET-Messung gemäß DIN ISO 9277 : 2014-01 (gemäß Kapitel 6.3.1, statischvolumetrisches Messverfahren, verwendetes Gas: Stickstoff) bestimmt werden kann.

Hierin wird der Begriff "Porenvolumen" verwendet. Das Porenvolumen kann mittels Quecksilberporosimetrie gemäß DIN ISO 15901-1:2016 bestimmt werden (Probenmasse 30 mg; Oberflächenspannung Quecksilber 0,48 N/m; Kontaktwinkel Quecksilber 141,3°; Gerät: Porotec Pascal 140 + 440; Messmethode: scanning; Startfülldruck 0,0128 MPa; Dilatometer: Pulver, kleines Volumen; Probenvorbereitung: 8h bei 110°C unter Vakuum).

Das erfindungsgemäße Produkt umfasst besagte Partikel aus mit Silberoxid und Rutheniumoxid ausgestattetem wasserunlöslichem anorganischem Material in einem Mengenanteil beispielsweise im Bereich von 90 bis 100 Gew.-% oder von 95 bis 100 Gew.-%, insbesondere 100 Gew.-%. Der mögliche, jedoch nicht mehr als 10 Gew.-% respektive nicht mehr als 5 Gew.-% ausmachende Mengenanteil kann durch entsprechende edelmetalloxid-freie Partikel aus dem wasserunlöslichen anorganischen Material, Rutheniumoxidpartikel und/oder Silberoxidpartikel gebildet sein. Mit anderen Worten, das erfindungsgemäße Produkt kann zu 90 bis 100 Gew.-% oder zu 95 bis 100 Gew.-% aus Partikeln aus dem mit Silberoxid und Rutheniumoxid ausgestatteten wasserunlöslichen anorganischen Material und zu 0 bis 10 Gew.-% respektive zu 0 bis 5 Gew.-% aus entsprechenden edelmetalloxid-freien Partikeln aus dem wasserunlöslichen anorganischen Material, Rutheniumoxidpartikeln und/oder Silberoxidpartikeln bestehen, wobei sich die jeweiligen Gew.-% jeweils zu 100 Gew.-% addieren. Neben den Partikeln aus dem mit Silberoxid und Rutheniumoxid ausgestatteten wasserunlöslichen anorganischen Material, und besagten 0 bis 10 Gew.-% respektive 0 bis 5 Gew.-% ausmachenden Bestandteilen umfasst das erfindungsgemäße Produkt keinerlei weiteres bewusst hinzugefügtes Material oder Substanzen.

Das Silberoxid und das Rutheniumoxid können auf inneren Oberflächen (innerhalb von Poren und/oder Hohlräumen) und/oder auf der äußeren Oberfläche der Trägerpartikel aus dem wasserunlöslichen anorganischen Material vorliegen und dabei beispielsweise eine diskontinuierliche Schicht und/oder kleine Silberoxid- respektive Rutheniumoxidpartikel (Silberoxid- respektive Rutheniumoxidinseln) ausbilden. Die Raster- und Transmissionselektronenmikroskopie kann eine geeignete Methode zur Betrachtung solcher morphologischer Eigenschaften sein. Das Silberoxid und das Rutheniumoxid liegen statistisch verteilt vor und beide Edelmetalloxide stehen dabei mindestens zum Teil in Kontakt miteinander. Für den Fachmann ist klar, dass das Silberoxid und das Rutheniumoxid des erfindungsgemäßen Produkts in geringem, praktisch vernachlässigbarem Umfang auch andere Silberspezies und andere Rutheniumspezies umfassen kann, beispielsweise elementares metallisches Silber respektive elementares metallisches Ruthenium und/oder von Silberoxid verschiedene Silber(I)-Verbindungen respektive von Rutheniumoxid verschiedene RutheniumVerbindungen, beispielsweise Halogenide und/oder Sulfide. Derartige Spezies können gegebenenfalls ungewollt und unvermeidlich als geringfügige Verunreinigung während der Herstellung oder im Anschluss daran gebildet werden, beispielsweise während Lagerung, Verwendung oder Weiterverarbeitung des erfindungsgemäßen Produkts.

Die Erfindung betrifft auch ein Verfahren zur Herstellung des erfindungsgemäßen Produkts. Aus einem anderen Blickwinkel betrachtet kann das Verfahren auch verstanden werden als Verfahren zur Ausstattung entsprechenden partikelförmigen wasserunlöslichen anorganischen Materials mit Silberoxid und Rutheniumoxid.

In dem erfindungsgemäßen Verfahren kann das erfindungsgemäße Produkt erhalten werden im Zuge einer Trocknung und einer unter nichtreduzierender Atmosphäre stattfindenden thermolytischen Behandlung einer Zubereitung umfassend Wasser, Partikel aus einem entsprechenden wasserunlöslichen anorganischen Material wie vorerwähnt, mindestens einen Silberoxidvorläufer und mindestens einen Rutheniumoxidvorläufer. Bei der thermolytischen Behandlung handelt es sich um eine Behandlung bei oder oberhalb der Thermolysetemperatur. Die Thermolysetemperatur ist die Mindest-Objekttemperatur, welche eine thermische Zersetzung des mindestens einen Silberoxidvorläufers und des mindestens einen Rutheniumoxidvorläufers unter nichtreduzierender Atmosphäre zu Silberoxid und Rutheniumoxid gewährleistet.

Der hierin wiederholt verwendete Begriff "nichtreduzierende Atmosphäre" bezeichnet eine oxidierende oder inerte Atmosphäre. Der Begriff "oxidierende Atmosphäre" bezeichnet eine Atmosphäre bestehend aus einem oxidierende Eigenschaften aufweisenden Gas wie beispielsweise Sauerstoff, Luft oder eine Gasmischung aus Sauerstoff und einem oder mehreren Inertgasen wie beispielsweise Stickstoff, Argon und/oder Kohlendioxid; der Volumenanteil von Sauerstoff innerhalb einer solchen Gasmischung mit Inertgas kann beispielsweise im Bereich von 10 bis 30 Vol.-% liegen. Der Begriff "inerte Atmosphäre" bezeichnet eine Atmosphäre bestehend aus einem oder mehreren Inertgasen wie beispielsweise Stickstoff, Argon und/oder Kohlendioxid.

In dem erfindungsgemäßen Verfahren werden vorerwähnte Partikel aus wasserunlöslichem anorganischem Material (d.h. aus einem entsprechenden wasserunlöslichen anorganischen Material), Silberoxidvorläufer und Rutheniumoxidvorläufer verwendet.

Wie schon gesagt, bei den vorerwähnten Partikeln aus dem wasserunlöslichen anorganischen Material handelt es sich um Partikel, deren Material als solches bevorzugt ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalcit und gamma-Aluminiumoxidhydroxid. Mit anderen Worten, die Partikel bestehen aus einem Material, das bevorzugt ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalcit und gamma-Aluminiumoxidhydroxid. Besonders bevorzugt sind entsprechende Partikel aus Titannitrid, alpha-Aluminiumoxid, Titandioxid in Form von Anatas oder Rutil, pyrogenem oder gefälltem Siliziumdioxid und gamma-Aluminiumoxidhydroxid.

Bevorzugt weisen die vorerwähnten Partikel aus dem wasserunlöslichen anorganischen Material eine durchschnittliche Teilchengröße (d50) im Bereich von 0,3 µm bis 40 µm und eine BET-Oberfläche im Bereich von 1 bis 2000 m²/g auf. Sie können ferner ein Porenvolumen im Bereich von 0,5 bis 10 mUg haben.

Bei den im erfindungsgemäßen Verfahren verwendeten Silberoxidvorläufern und Rutheniumoxidvorläufern handelt es sich um unter nichtreduzierender Atmosphäre thermisch zu Silberoxid respektive Rutheniumoxid zersetzbare Silber- respektive Rutheniumverbindungen.

Alle unter nichtreduzierender Atmosphäre thermisch zu Silberoxid zersetzbaren Silberverbindungen können im erfindungsgemäßen Verfahren unter oxidierender Atmosphäre thermolytisch behandelt und dabei zu Silberoxid thermisch zersetzt werden. Der Fachmann kann eine solche Eignung einer Silberverbindung zur thermischen Zersetzung zu Silberoxid unter oxidierender Atmosphäre leicht, beispielsweise thermogravimetrisch unter oxidierender Atmosphäre ermitteln. Beispiele für in dem Kontext als Silberoxidvorläufer geeignete Silberverbindungen umfassen Silberacetat und Silbernitrat.

Einige unter nichtreduzierender Atmosphäre thermisch zu Silberoxid zersetzbare Silberverbindungen können im erfindungsgemäßen Verfahren sogar unter inerter Atmosphäre thermolytisch behandelt und dabei zu Silberoxid thermisch zersetzt werden. Der Fachmann kann eine solche Eignung einer Silberverbindung zur thermischen Zersetzung zu Silberoxid unter inerter Atmosphäre leicht, beispielsweise thermogravimetrisch unter Inertgasatmosphäre ermitteln. Ein Beispiel für eine in dem Kontext als Silberoxidvorläufer geeignete Silberverbindung ist Silbernitrat.

Alle unter nichtreduzierender Atmosphäre thermisch zu Rutheniumoxid zersetzbaren Rutheniumverbindungen können im erfindungsgemäßen Verfahren unter oxidierender Atmosphäre thermolytisch behandelt und dabei zu Rutheniumoxid thermisch zersetzt werden. Der Fachmann kann eine solche Eignung einer Rutheniumverbindung zur thermischen Zersetzung zu Rutheniumoxid unter oxidierender Atmosphäre leicht, beispielsweise thermogravimetrisch unter oxidierender Atmosphäre ermitteln. Beispiele für in dem Kontext als Rutheniumoxidvorläufer geeignete Rutheniumverbindungen umfassen Rutheniumnitrosylnitrat, Rutheniumoxalat, Rutheniumacetat und insbesondere Rutheniumnitrosyloxalat.

Einige unter nichtreduzierender Atmosphäre thermisch zu Rutheniumoxid zersetzbaren Rutheniumverbindungen können im erfindungsgemäßen Verfahren sogar unter inerter Atmosphäre thermolytisch behandelt und dabei zu Rutheniumoxid thermisch zersetzt werden. Der Fachmann kann eine solche Eignung einer Rutheniumverbindung zur thermischen Zersetzung zu Rutheniumoxid unter inerter Atmosphäre leicht, beispielsweise thermogravimetrisch unter Inertgasatmosphäre ermitteln. Beispiele für in dem Kontext als Rutheniumoxidvorläufer geeignete Rutheniumverbindungen umfassen Rutheniumnitrosylnitrat, Rutheniumoxalat und insbesondere Rutheniumnitrosyloxalat.

Beispielsweise kann bei dem erfindungsgemäßen Verfahren eine Kombination von Silbernitrat und Rutheniumnitrosyloxalat oder Rutheniumnitrosylnitrat verwendet und dabei bevorzugt unter oxidierender Atmosphäre thermolytisch behandelt werden.

Das erfindungsgemäße Herstellungsverfahren umfasst aufeinanderfolgend die Bereitstellung einer Zubereitung umfassend Wasser, Partikel aus dem wasserunlöslichen anorganischen Material, mindestens einen Silberoxidvorläufer und mindestens einen Rutheniumoxidvorläufer, sowie das Trocknen und thermolytische Behandeln der Zubereitung unter nichtreduzierender Atmosphäre. Das Trocknen und das thermolytische Behandeln können nacheinander oder als gemeinsamer Schritt durchgeführt werden.

In einer ersten Ausführungsform umfasst das erfindungsgemäße Verfahren daher die aufeinanderfolgenden Schritte:
(1) Bereitstellen einer Zubereitung umfassend Wasser, Partikel aus dem wasserunlöslichen anorganischen Material, mindestens einen Silberoxidvorläufer und mindestens einen Rutheniumoxidvorläufer,
(2) Trocknen der in Schritt (1) bereitgestellten Zubereitung, und
(3) thermolytische Behandlung der nach Beendigung von Schritt (2) erhaltenen getrockneten Zubereitung unter nichtreduzierender Atmosphäre.

In einer zweiten Ausführungsform gemeinsam durchgeführter Schritte (2) und (3) umfasst das erfindungsgemäße Verfahren die aufeinanderfolgenden Schritte:
(1) Bereitstellen einer Zubereitung umfassend Wasser, Partikel aus dem wasserunlöslichen anorganischen Material, mindestens einen Silberoxidvorläufer und mindestens einen Rutheniumoxidvorläufer, und
(2+3) Trocknen und thermolytische Behandlung der in Schritt (1) bereitgestellten Zubereitung unter nichtreduzierender Atmosphäre.

In Schritt (1) gemäß beider Ausführungsformen des erfindungsgemäßen Verfahrens wird eine Zubereitung bereitgestellt, welche Wasser, Partikel aus dem wasserunlöslichen anorganischen Material, mindestens einen Silberoxidvorläufer und mindestens einen Rutheniumoxidvorläufer umfasst. Die Zubereitung kann entweder in Form einer wässrigen Suspension oder in Form imprägnierter Partikel vorliegen. Die beiden Formen (a) wässrige Suspension versus (b) imprägnierte Partikel unterscheiden sich durch das Vorhandensein respektive Nichtvorhandensein von wässriger Flüssigkeit zwischen den Partikeln; während im Falle der wässrigen Suspension wässrige Flüssigkeit zwischen den Partikeln vorliegt, ist dies bei den imprägnierten Partikeln nicht der Fall, letztere haben die Erscheinungsform trockenen respektive frei fließfähigen Pulvers und die wässrige Flüssigkeit bildet einen Bestandteil der Partikel bzw. befindet sich innerhalb der Partikel.

Die Herstellung der wässrigen Suspension kann erfolgen, indem die Partikel aus dem wasserunlöslichen anorganischen Material zu einer wässrigen Lösung des mindestens einen Silberoxidvorläufers als auch des mindestens einen Rutheniumoxidvorläufers zugegeben und darin suspendiert werden.

Bevorzugt wird jedoch so gearbeitet, dass Silberoxidvorläufer und Rutheniumoxidvorläufer - bevorzugt jeweils als wässrige Lösung - zugleich oder in beliebiger Reihenfolge (zeitversetzt überlappend, alternierend oder nacheinander) zu einer vorgelegten wässrigen Suspension von Partikeln aus dem wasserunlöslichen anorganischen Material zugegeben werden. Besonders bevorzugt ist es, dass eine wässrige Lösung beider Edelmetalloxidvorläufer (des mindestens einen Silberoxidvorläufers als auch des mindestens einen Rutheniumoxidvorläufers) zu einer vorgelegten wässrigen Suspension von Partikeln aus dem wasserunlöslichen anorganischen Material zugegeben wird. Im Allgemeinen wird während und auch noch nach der Zugabe vermischt, beispielsweise durch Rühren.

Der Gewichtsanteil der Partikel aus dem wasserunlöslichen anorganischen Material der in Schritt (1) des erfindungsgemäßen Verfahrens bereitgestellten wässrigen Suspension kann beispielsweise im Bereich von 5 bis 30 Gew.-% liegen.

Der aus Silber und Ruthenium gebildete Edelmetall-Gewichtsanteil der in Schritt (1) des erfindungsgemäßen Verfahrens bereitgestellten wässrigen Suspension kann beispielsweise im Bereich von 1 bis 20 Gew.-% liegen. Die in Schritt (1) des erfindungsgemäßen Verfahrens bereitgestellte wässrige Suspension zeichnet sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Neben den Partikeln aus dem wasserunlöslichen anorganischen Material, dem oder den Silberoxidvorläufern und dem oder den Rutheniumoxidvorläufern umfasst die in Schritt (1) des erfindungsgemäßen Verfahrens bereitgestellte wässrige Suspension im Allgemeinen nur Wasser und gegebenenfalls korrespondierende Säure aus den Edelmetalloxidvorläufern.

Die Herstellung der Zubereitung in Form imprägnierter Partikel ist bevorzugt. Sie kann erfolgen, indem die Partikel aus dem wasserunlöslichen anorganischen Material mit einer wässrigen Lösung des mindestens einen Silberoxidvorläufers als auch des mindestens einen Rutheniumoxidvorläufers in fachüblicher Weise imprägniert werden. Der Imprägniervorgang kann dabei einmalig oder wiederholt durchgeführt werden, im letzteren Fall jeweils mit einem zwischen den einzelnen Imprägnierschritten stattfindenden Trockungsschritt.

Beim Imprägnieren ist so vorzugehen, dass keine wässrige Suspension, d.h. weder eine dünnflüssige Aufschlämmung noch eine brei-, pasten- oder teigförmige Masse entsteht, sondern imprägnierte Partikel in Form eines makroskopisch betrachtet homogenen und frei fließfähigen Pulvers gebildet werden. Mit anderen Worten, das Volumen an wässriger Lösung muss entsprechend gering und passend zu den damit zu imprägnierenden Partikeln aus dem wasserunlöslichen anorganischen Material gewählt werden. Bei Durchführung der Imprägnierung ist es zweckmäßig, dem Vermischen der Partikel aus dem wasserunlöslichen anorganischen Material und der wässrigen Lösung hinreichend Zeit zu gewähren. Beispielsweise kann es zweckmäßig sein, hinreichend lange zu vermischen, insbesondere bis besagter makroskopisch betrachtet homogener Zustand des Mischgutes erreicht ist. Das Volumen der wässrigen Lösung kann über die jeweilige Konzentration der Edelmetalloxidvorläufer an die damit in Kontakt zu bringende Menge der Partikel aus dem wasserunlöslichen anorganischen Material und deren Aufnahmeverhalten für die wässrige Lösung angepasst gewählt werden. Bei zu groß gewähltem Volumen entstehen die vorerwähnten unerwünschten Aufschlämmungen, Breie, Teige oder Pasten. Der Fachmann kann das Aufnahmeverhalten betreffender Partikel aus einem wasserunlöslichen anorganischen Material für eine betreffende wässrige Lösung in orientierenden Laborversuchen leicht ermitteln und so die Obergrenze in Liter wässriger Lösung pro Kilogramm Partikel aus dem wasserunlöslichen anorganischen Material bestimmen, ohne dass ein Verlust besagter freier Fließfähigkeit eintritt.

Der Gewichtsanteil der Partikel aus dem wasserunlöslichen anorganischen Material der in Schritt (1) des erfindungsgemäßen Verfahrens bereitgestellten imprägnierten Partikel kann beispielsweise im Bereich von 50 bis 90 Gew.-% liegen.

Der aus Silber und Ruthenium gebildete Edelmetall-Gewichtsanteil der in Schritt (1) des erfindungsgemäßen Verfahrens bereitgestellten imprägnierten Partikel kann beispielsweise im Bereich von 3 bis 20 Gew.-% liegen. Die in Schritt (1) des erfindungsgemäßen Verfahrens bereitgestellten imprägnierten Partikel zeichnen sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Neben den Partikeln aus dem wasserunlöslichen anorganischen Material und den Edelmetalloxidvorläufern umfassen die in Schritt (1) des erfindungsgemäßen Verfahrens bereitgestellten imprägnierten Partikel im Allgemeinen nur Wasser und gegebenenfalls korrespondierende Säure aus den Edelmetalloxidvorläufern. Der Wassergehalt der in Schritt (1) des erfindungsgemäßen Verfahrens bereitgestellten imprägnierten Partikel kann beispielsweise im Bereich von 7 bis 35 Gew.-% liegen.

In Schritt (2) gemäß der ersten Ausführungsform des erfindungsgemäßen Verfahrens wird die in Schritt (1) bereitgestellte Zubereitung getrocknet, d.h. von Wasser und gegebenenfalls vorhandenen weiteren flüchtigen Substanzen befreit.

Im Fall der wässrigen Suspension wird diese bis zur Trockne eingeengt. Zweckmäßig wird die wässrige Suspension während des Einengens bewegt, beispielsweise durch Rühren und/oder Schütteln und/oder Rotation, d.h. Rotation des die wässrige Suspension beinhaltenden Gefäßes oder Behältnisses. Im Allgemeinen wird während des Einengens erwärmt und/oder Unterdruck angelegt, um Wasser und gegebenenfalls vorhandene weitere flüchtige Substanzen zu entfernen. Während des Einengens kann bei einer Temperatur beispielsweise im Bereich von 40 bis 110 °C gearbeitet werden. Das nach Erreichen der Trockne erhaltene Material kann bei Bedarf zerkleinert werden.

Im Fall der imprägnierten Partikel können diese in einem Ofen getrocknet werden bei einer Temperatur beispielsweise im Bereich von 40 bis 110 °C. Unterstützend kann Unterdruck angelegt werden. Das so getrocknete Material kann bei Bedarf zerkleinert werden.

In Schritt (3) gemäß der ersten Ausführungsform des erfindungsgemäßen Verfahrens werden die Edelmetalloxidvorläufer thermisch unter Bildung von Silberoxid und Rutheniumoxid zersetzt. Dazu wird das nach Beendigung von Schritt (2) erhaltene und gegebenenfalls zerkleinerte Material einer thermolytischen Behandlung unter nichtreduzierender Atmosphäre unterworfen. Zu dem Zweck kann das Material unbewegt oder bewegt auf eine Thermolysetemperatur beispielsweise im Bereich von 120 bis 900°C, bevorzugt 150 bis 400 °C erhitzt werden, beispielsweise in einem statischen Ofen, einem Wirbelschichtreaktor oder einem Drehrohrofen. Zweckmäßig wird der Ofenraum während Schritt (3) mit dem nichtreduzierenden Gas oder Gasgemisch gespült respektive durchströmt; der Gasstrom kann dabei auch dem Austrag von gasförmigen Zersetzungsprodukten dienen. Die nichtreduzierende Atmosphäre kann auch druckreduziert sein.

Im kombinierten Schritt (2+3) gemäß einer ersten Variante der zweiten Ausführungsform des erfindungsgemäßen Verfahrens wird die in Schritt (1) bereitgestellte Zubereitung getrocknet und unter nichtreduzierender Atmosphäre thermolytisch behandelt. Dabei kann die in Schritt (1) bereitgestellte Zubereitung innerhalb eines Ofens bewegt oder unbewegt ein Temperaturprofil umfassend eine Trocknungstemperatur und eine höhere Thermolysetemperatur durchlaufen. Dies kann verwirklicht werden, indem ein Ofen mit einem Trocknungstemperatur und Thermolysetemperatur umfassenden Temperaturgradienten durchlaufen wird oder indem in einem Ofen mit zeitlich gesteuertem Aufheiz- respektive Temperaturprogramm gearbeitet wird, welches zunächst Trocknungstemperatur und anschließend Thermolysetemperatur sicherstellt. Beispiele für verwendbare Ofentypen umfassen statische Öfen, Wirbelschichtreaktoren und Drehrohröfen. Es kann mit der in Schritt (1) in Form einer wässrigen Suspension bereitgestellten Zubereitung gearbeitet werden, bevorzugt ist es jedoch mit der in Schritt (1) in Form imprägnierter Partikel bereitgestellten Zubereitung zu arbeiten.

In jedem Fall erfolgt so zunächst eine Trocknung der in Schritt (1) bereitgestellten Zubereitung, d.h. eine Befreiung von Wasser und gegebenenfalls vorhandenen weiteren flüchtigen Substanzen. Im Fall der in Schritt (1) bereitgestellten Zubereitung als wässrige Suspension wird diese bis zur Trockne eingeengt. Während des Einengens kann bei einer Trocknungstemperatur beispielsweise im Bereich von 40 bis 110 °C gearbeitet werden. Im Fall der in Schritt (1) in Form imprägnierter Partikel bereitgestellten Zubereitung können diese ebenfalls bei einer Trocknungstemperatur beispielsweise im Bereich von 40 bis 110 °C getrocknet werden. Nach beendeter Trocknung werden die Edelmetalloxidvorläufer thermisch unter Bildung von Silberoxid und Rutheniumoxid zersetzt, indem sie unmittelbar ohne zwischenzeitliches Abkühlen weiter erhitzt werden auf Thermolysetemperatur beispielsweise im Bereich von 120 bis 900 °C, bevorzugt 150 bis 400 °C; d.h. das getrocknete Material wird einer thermolytischen Behandlung unterworfen. Besagte Trocknung als auch besagte sich daran unmittelbar anschließende Thermolyse erfolgen unter nichtreduzierender Atmosphäre.

Auch im kombinierten Schritt (2+3) gemäß einer zweiten Variante der zweiten Ausführungsform des erfindungsgemäßen Verfahrens wird die in Schritt (1) bereitgestellte Zubereitung getrocknet und unter nichtreduzierender Atmosphäre thermolytisch behandelt. Dabei kann die in Schritt (1) bereitgestellte Zubereitung bewegt oder unbewegt besagter Thermolysetemperatur beispielsweise im Bereich von 120 bis 900°C, bevorzugt 150 bis 400°C innerhalb eines Ofens ausgesetzt werden. Beispiele für verwendbare Ofentypen umfassen statische Öfen, Wirbelschichtreaktoren und Drehrohröfen. Es kann mit der in Schritt (1) in Form einer wässrigen Suspension bereitgestellten Zubereitung gearbeitet werden, bevorzugt ist es jedoch mit der in Schritt (1) in Form imprägnierter Partikel bereitgestellten Zubereitung zu arbeiten. Dabei werden die Edelmetalloxidvorläufer thermisch unter Bildung von Silberoxid und Rutheniumoxid zersetzt. Trocknung und Thermolyse erfolgen hier praktisch parallel. Gearbeitet wird unter nichtreduzierender Atmosphäre.

Nach Beendigung von Schritt (3) gemäß der ersten Ausführungsform oder von Schritt (2+3) gemäß beider Varianten der zweiten Ausführungsform des erfindungsgemäßen Verfahrens sowie gegebenenfalls einem sich anschließenden Zerkleinern und/oder Klassieren erhält man das erfindungsgemäße Produkt.

Erfindungsgemäßes Produkt, d.h. erfindungsgemäßes mit Silberoxid und Rutheniumoxid ausgestattetes partikelförmiges wasserunlösliches anorganisches Material zeichnet sich aus durch eine dunkle bzw. schwarze Farbe mit einer dementsprechend geringen Helligkeit L* beispielsweise im Bereich von 35 bis 45, was für manche Anwendungen störend sein kann. Bei der Helligkeit L* handelt es sich um spektralphotometrisch bei einer Messgeometrie von d/8° bestimmtes L* im CIEL*a*b*-Farbraum (DIN EN ISO/CIE 11664-4:2020-03); die spektralphotometrische Messung des erfindungsgemäßen Produkts kann an einer mit 1 cm Füllhöhe in ein farbloses Glasgefäß eingefüllten Probe durch den ebenen Glasboden des auf den Messkopf des verwendeten Spektralphotometers gestellten Glasgefäßes hindurch durchgeführt werden.

Falls gewünscht kann erfindungsgemäßes Produkt zu einem aufgehellten partikelförmigen Material mit einer Helligkeit L* beispielsweise im Bereich von 50 bis 85 weiterverarbeitet werden. Zum Zweck der Aufhellung kann das erfindungsgemäße Produkt mit mindestens einem C1-C4-Alkoxid von Aluminium, Magnesium, Calcium, Silizium, Zink, Zirkonium und/oder Titan in Gegenwart einer zur vollständigen Hydrolyse des mindestens einen C1-C4-Alkoxids mindestens hinreichenden Menge von Wasser in Kontakt gebracht werden. Dabei kann wie gesagt ein aufgehelltes partikelförmiges Material, d.h. ein partikelförmiges Material mit einer Farbe, beispielsweise mit einer grauen Farbe, mit einer Helligkeit L* beispielsweise im Bereich von 50 bis 85 gebildet werden. Dieses aufgehellte partikelförmige Material besteht aus dem erfindungsgemäßen Produkt mit einem zumindest anteilig darauf befindlichen Feststoff. Abhängig von der Wahl des mindestens einen C1-C4-Alkoxids handelt es sich bei dem Feststoff um einen Feststoff ausgewählt aus der Gruppe bestehend aus Aluminiumoxid, Aluminiumhydroxid, Aluminiumoxidhydroxid, Magnesiumoxid, Magnesiumhydroxid, Magnesiumoxidhydroxid, Calciumoxid, Calciumhydroxid, Calciumoxidhydroxid, Siliziumdioxid, Kieselsäure, Zinkoxid, Zinkhydroxid, Zinkoxidhydroxid, Zirkoniumdioxid, Zirkonium(IV)oxidhydraten, Titandioxid, Titan(IV)oxidhydraten und Kombinationen davon.

Das erfindungsgemäße Produkt - gegebenenfalls wie vorerwähnt aufgehellt - zeichnet sich durch eine besonders ausgeprägte antimikrobielle Wirkung aus, wie in üblichen Hemmhof-Tests oder durch Bestimmung der minimalen Hemmkonzentration aus Wachstumskurven von Mikroorganismen festgestellt werden kann. Die Erfindung betrifft insofern auch die Verwendung des gegebenenfalls aufgehellten, erfindungsgemäßen Produkts als Additiv zur antimikrobiellen Ausrüstung von Metalloberflächen; Beschichtungsmitteln wie Lacken und anderen Anstrichmitteln; Putzen; Formmassen; Kunststoffen in Gestalt von Kunststofffolien, Kunststoffteilen oder Kunststofffasern; Textilien respektive textilen Anwendungen; Kunstharzprodukten; Ionenaustauscherharzen; Silikonprodukten; Cellulose-basierenden Produkten; Schaumstoffen; Kosmetika; und vielem anderen mehr.

Das erfindungsgemäße Produkt - gegebenenfalls wie vorerwähnt aufgehellt - kann im Übrigen auch als heterogener Katalysator verwendet werden, beispielsweise bei der Katalyse der Bildung von Hydroxylradikalen innerhalb von wässrigen, ein Bakterienwachstum erlaubenden Medien.

Das erfindungsgemäße Produkt - gegebenenfalls wie vorerwähnt aufgehellt - kann bei den vorerwähnten Verwendungen als trockenes Pulver eingesetzt werden. Falls zweckmäßig oder gewünscht kann es zuvor mit Wasser auf einen gewünschten Feuchtegehalt eingestellt oder in eine wässrige Suspension überführt werden.

### Beispiele

### Referenzbeispiel 1 (Thermolytische Herstellung eines mit 20,7 Gew.-% elementarem Silber und 1,3 Gew.-% elementarem Ruthenium ausgestatteten partikelförmigen anorganischen Materials):

Eine wässrige Lösung, zubereitet aus 52,4 g wässriger Silbernitrat-Lösung (Silberanteil 36,2 Gew.-%; 176,2 mmol Ag) und 5,3 g wässriger Rutheniumnitrosylnitrat-Lösung (Rutheniumanteil 18,9 Gew.-%; 9,8 mmol Ru), wurde unter Schütteln zu 80 g Zeolithpulver (Betazeolithe -SAR40 von PIDC) zugegeben. Anschließend wurde das Material im Trockenschrank bei 105 °C /300 mbar getrocknet. Das Material wurde dann im Rohrofen für 5 Stunden unter Formiergasatmosphäre (5 Vol.-% Wasserstoff / 95 Vol.-% Stickstoff) bei 250 °C calciniert und mit einem Achatmörser zerkleinert. Mittels ICP-OES (inductively coupled plasma optical emission spectrometry, deutsch: optische Emissionsspektrometrie mittels induktiv gekoppelten Plasmas) wurde ein Silbergehalt von 20,7 Gew.-% und ein Rutheniumgehalt von 1,3 Gew.-% des Produktes (jeweils bezogen auf 0 Gew.-% Restfeuchte) bestimmt. Mittels XRD (X-ray diffraction, deutsch: Röntgenbeugung) wurden das vom Produkt umfasste Silber und Ruthenium jeweils als elementares Metall bestätigt.

### Erfindungsgemäßes Beispiel 2 (Thermolytische Herstellung eines mit 19 Gew.-% Silber in Form von Silberoxid und 1 Gew.-% Ruthenium in Form von Rutheniumoxid ausgestatteten partikelförmigen anorganischen Materials):

Eine wässrige Lösung, zubereitet aus 26,2 g wässriger Silbernitrat-Lösung (Silberanteil 36,2 Gew.-%; 88,1 mmol Ag) und 2,6 g wässriger Rutheniumnitrosylnitrat-Lösung (Rutheniumanteil 18,9 Gew.-%; 4,9 mmol Ru) und 3,2 g Wasser, wurde unter Schütteln zu 40 g Zeolithpulver (Puralox TM100/150 UF von Sasol) gegeben. Anschließend wurde das Material im Trockenschrank bei 105 °C /300 mbar für 5 h getrocknet. Das Material wurde dann im Rohrofen für 16 Stunden unter Luftatmosphäre bei 250 °C calciniert und mit einem Achatmörser zerkleinert. Mittels ICP-OES wurde ein Silbergehalt von 18,7 Gew.-% und ein Rutheniumgehalt von 1,0 Gew.-% des Produktes (bezogen auf 0 Gew.-% Restfeuchte) bestimmt. Mittels XPS (X-ray Photoelectron Spectroscopy, deutsch: Röntgenphotoelektronenspektroskopie) wurden das vom Produkt umfasste Silber und Ruthenium jeweils als das entsprechende Metalloxid bestätigt.

### Beispiel 3 (Vergleichende Prüfung der Produkte aus Referenzbeispiel 1 und dem erfindungsgemäßen Beispiel 2 auf ihre antimikrobielle Wirkung):

Die antimikrobielle Wirkung kann unter anderem chemisch untersucht werden. Zur chemischen Untersuchung gehört die Bestimmung der in Anwesenheit von Sauerstoff und Wasser durch die Produkte erzeugte Konzentration an Wasserstoffperoxid und weiteren reaktiven Sauerstoffspezies mittels UV/VIS-Spektroskopie.

Das zu untersuchende Produkt wird in einer sauren wässrigen Lösung von Eisen(II)-Ionen und dem Farbstoff Xylenolorange inkubiert. Durch die Reaktion mit den in situ gebildeten reaktiven Sauerstoffspezies entstehen Eisen(III)-Ionen, welche mit dem organischen Farbstoff einen violetten Komplex ausbilden. Anhand der photometrischen Bestimmung der Konzentration des Komplexes in Lösung lässt sich die Menge an erzeugten Radikalen in µg/L ermitteln. Um eine möglichst genaue Bestimmung der Radikalkonzentration zu realisieren, werden am Untersuchungstag mehrfache Verdünnungen einer Wasserstoffperoxid-Stammlösung analog analysiert und eine Kalibriergerade erstellt.

Für die konkrete Untersuchung wurden in einem Messkolben 50 mg des zu untersuchenden Produkts, 2,5 mL einer sauren 4 mM Ammoniumeisen(II)sulfat-Lösung und 0,5 mL einer 2,7 mM Lösung von Xylenolorange vorgelegt. Die Probe wurde durch Zugabe von destilliertem Wasser auf 50 mL aufgefüllt und 55 min bei Raumtemperatur und 450 U/min gerührt. Nach fünfminütiger Sedimentationszeit wurde eine Probe der überstehenden Lösung filtriert und die Extinktion bei 585 nm bestimmt. Anhand der Kalibriergerade wurde die Extinktion der Probe in die Konzentration an Wasserstoffperoxid umgerechnet.

Die entsprechende Probenmenge des Produktes aus Referenzbeispiel 1 respektive aus dem erfindungsgemäßen Beispiel 2 wurde zur Berechnung der Radikalkonzentration herangezogen. Dabei ergab sich ein Wert für das Produkt aus Referenzbeispiel 1 von 1157 µg/L und ein vergleichbarer Wert für das Produkt aus dem erfindungsgemäßen Beispiel 2 von 951 µg/L.

## Patentansprüche

1. Mit Silberoxid und Rutheniumoxid ausgestattetes partikelförmiges wasserunlösliches anorganisches Material.

2. Mit Silberoxid und Rutheniumoxid ausgestattetes partikelförmiges wasserunlösliches anorganisches Material nach Anspruch 1, wobei das wasserunlösliche anorganische Material ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalcit und gamma-Aluminiumoxidhydroxid.

3. Mit Silberoxid und Rutheniumoxid ausgestattetes partikelförmiges wasserunlösliches anorganisches Material nach Anspruch 1 oder 2, wobei dessen durch das Silberoxid und Rutheniumoxid gebildeter Silber-plus-Ruthenium-Gewichtsanteil im Bereich von 0,1 bis 50 Gew.-% liegt bei einem zugleich herrschenden Silber: Ruthenium-Gewichtsverhältnis im Bereich von 1 bis 2000 Gewichtsteilen Silber: 1 Gewichtsteil Ruthenium.

4. Mit Silberoxid und Rutheniumoxid ausgestattetes partikelförmiges wasserunlösliches anorganisches Material nach einem der vorhergehenden Ansprüche mit einer durchschnittlichen Teilchengröße (d50) im Bereich von 0,3 bis 100 µm und mit einer BET-Oberfläche im Bereich von 1 bis 2000 m²/g.

5. Mit Silberoxid und Rutheniumoxid ausgestattetes partikelförmiges wasserunlösliches anorganisches Material nach einem der vorhergehenden Ansprüche bestehend zu 90 bis 100 Gew.-% aus Partikeln aus dem mit Silberoxid und Rutheniumoxid ausgestatteten wasserunlöslichen anorganischen Material und zu 0 bis 10 Gew.-% aus entsprechenden edelmetalloxid-freien Partikeln aus dem wasserunlöslichen anorganischen Material, Rutheniumoxidpartikeln und/oder Silberoxidpartikeln.

6. Verfahren zur Herstellung eines mit Silberoxid und Rutheniumoxid ausgestatteten partikelförmigen wasserunlöslichen anorganischen Materials nach einem der vorhergehenden Ansprüche durch Trocknung und einer unter nichtreduzierender Atmosphäre stattfindenden thermolytischen Behandlung einer Zubereitung umfassend Wasser, Partikel aus einem entsprechenden wasserunlöslichen anorganischen Material, mindestens einen Silberoxidvorläufer und mindestens einen Rutheniumoxidvorläufer.

7. Verfahren nach Anspruch 6, wobei es sich bei der nichtreduzierenden Atmosphäre um eine oxidierende oder inerte Atmosphäre handelt.

8. Verfahren nach Anspruch 6 oder 7, wobei es sich bei den Silberoxidvorläufern und Rutheniumoxidvorläufern um unter nichtreduzierender Atmosphäre thermisch zu Silberoxid respektive Rutheniumoxid zersetzbare Silber- respektive Rutheniumverbindungen handelt.

9. Verfahren nach einem der Ansprüche 6 bis 8, wobei es sich bei der nichtreduzierenden Atmosphäre um eine oxidierende Atmosphäre handelt, wobei der mindestens eine Silberoxidvorläufer ausgewählt ist aus der Gruppe bestehend aus Silberacetat und Silbernitrat und wobei der mindestens eine Rutheniumoxidvorläufer ausgewählt ist aus der Gruppe bestehend aus Rutheniumnitrosylnitrat, Rutheniumoxalat, Rutheniumacetat und Rutheniumnitrosyloxalat.

10. Verfahren nach einem der Ansprüche 6 bis 8, wobei es sich bei der nichtreduzierenden Atmosphäre um eine inerte Atmosphäre handelt, wobei der mindestens eine Silberoxidvorläufer Silbernitrat ist und wobei der mindestens eine Rutheniumoxidvorläufer ausgewählt ist aus der Gruppe bestehend aus Rutheniumnitrosylnitrat, Rutheniumoxalat und Rutheniumnitrosyloxalat.

11. Verfahren nach einem der Ansprüche 6 bis 10 umfassend die aufeinanderfolgenden Schritte:
(1) Bereitstellen der Zubereitung,
(2) Trocknen der in Schritt (1) bereitgestellten Zubereitung, und
(3) thermolytische Behandlung der nach Beendigung von Schritt (2) erhaltenen getrockneten Zubereitung unter nichtreduzierender Atmosphäre,
oder umfassend die aufeinanderfolgenden Schritte:
(1) Bereitstellen der Zubereitung, und
(2+3) Trocknen und thermolytische Behandlung der in Schritt (1) bereitgestellten Zubereitung unter nichtreduzierender Atmosphäre.

12. Verfahren nach einem der Ansprüche 6 bis 11, wobei es sich bei der Zubereitung um eine wässrige Suspension oder um imprägnierte Partikel handelt.

13. Verfahren nach einem der Ansprüche 6 bis 12, wobei das thermolytische Behandeln bei einer Thermolysetemperatur im Bereich von 120 bis 900°C erfolgt.

14. Verfahren nach einem der Ansprüche 6 bis 13, wobei das erhaltene mit Silberoxid und Rutheniumoxid ausgestattete partikelförmige wasserunlösliche anorganische Material zu einem aufgehellten partikelförmigen Material mit einer Helligkeit L* im Bereich von 50 bis 85 weiterverarbeitet wird, indem es mit mindestens einem C1-C4-Alkoxid von Aluminium, Magnesium, Calcium, Silizium, Zink, Zirkonium und/oder Titan in Gegenwart einer zur vollständigen Hydrolyse des mindestens einen C1-C4-Alkoxids mindestens hinreichenden Menge von Wasser in Kontakt gebracht wird.

15. Verwendung des mit Silberoxid und Rutheniumoxid ausgestatteten partikelförmigen wasserunlöslichen anorganischen Materials nach einem der Ansprüche 1 bis 6 oder eines Produkts hergestellt nach einem Verfahren eines der Ansprüche 7 bis 14 als Additiv zur antimikrobiellen Ausrüstung von Metalloberflächen; Beschichtungsmitteln wie Lacken und anderen Anstrichmitteln; Putzen; Formmassen; Kunststoffen in Gestalt von Kunststofffolien, Kunststoffteilen oder Kunststofffasern; Textilien respektive textilen Anwendungen; Kunstharzprodukten; lonenaustauscherharzen; Silikonprodukten; Cellulose-basierenden Produkten; Schaumstoffen; und Kosmetika oder als heterogener Katalysator bei der Katalyse der Bildung von Hydroxylradikalen innerhalb von wässrigen, ein Bakterienwachstum erlaubenden Medien.
